Europäisches Patentamt

European Patent Office

Office européen des brevets

(19)

(11) **EP 0 702 245 B1**

(12) **EUROPÄISCHE PATENTSCHRIFT**

(45) Veröffentlichungstag und Bekanntmachung des Hinweises auf die Patenterteilung:
**29.03.2000 Patentblatt 2000/13**

(51) Int Cl.$^7$: **G01S 3/86**

(21) Anmeldenummer: **95113745.4**

(22) Anmeldetag: **01.09.1995**

(54) **Verfahren zur Befreiung von Körperschallstörungen**

Method for the suppression of interference due to acoustical body resonance

Procédé pour supprimer les perturbations de résonance acoustique d'un corps

(84) Benannte Vertragsstaaten:
**DE FR GB NL**

(30) Priorität: **13.09.1994 DE 4432532**

(43) Veröffentlichungstag der Anmeldung:
**20.03.1996 Patentblatt 1996/12**

(73) Patentinhaber: **STN ATLAS Elektronik GmbH
28305 Bremen (DE)**

(72) Erfinder: **Arens, Egidius, Dipl.-Ing.
D-28832 Achim (DE)**

(56) Entgegenhaltungen:
DE-A- 3 520 398     GB-A- 2 271 908
US-A- 3 973 112     US-A- 4 628 530

## Beschreibung

Die Erfindung betrifft ein Verfahren zur Befreiung von Körperschallstörungen bei Empfangssignalen einer akustischen Peilanlage der im Oberbegriff des Anspruchs 1 genannten Art.

In der Wasserschalltechnik werden Empfangsanlagen mit einer Vielzahl von elektroakustischen Wandlern auf einem Trägerfahrzeug, zum Beispiel einem U-Boot oder Oberflächenschiff, eingebaut, um Ziele, z. B. Schiffe, U-Boote oder Torpedos, aufgrund ihrer Fahrgeräusche zu peilen. Auf dem Trägerfahrzeug befinden sich Antriebsmaschinen und andere laufende Aggregate. Ihre Vibrationen verursachen in den Wandungen des Trägerfahrzeugs Körperschall, der auch in das Wasser abgestrahlt wird. Die elektroakustischen Wandler der Empfangsanlage empfangen über die Wandung und über das Wasser den Körperschall und gleichzeitig Schallwellen, die von den zu ortenden Zielen abgestrahlt werden. Der Empfang des Körperschalls führt zu Fehlern in der Peilung. Die gleichen Probleme gelten für Peilanlagen mit Mikrophonen in der Luftschalltechnik, z.B. zum Orten von Hubschraubern von einem Lastkraftwagen oder Panzer als Trägerfahrzeug.

In der US-PS 45 94 695 werden Empfangssignale eines elektroakustischen Wandlers einer Peilanlage von solchen unerwünschten Signalanteilen befreit. Ein Körperschallsensor, der in der Nähe der körperschallverursachenden Aggregate angeordnet ist und allein Störungen empfängt, liefert ein Referenzstörsignal. Es wird die Kreuzkorrelationsfunktion oder das komplexe Kreuzspektrum zwischen den Empfangssignalen und den Referenzstörsignalen gebildet und daraus ein Korrektursignal gewonnen und phasenrichtig vom Empfangssignal abgezogen. Das Korrektursignal erhält man dadurch, daß Frequenzanteile des Referenzstörsignals durch Filterbänke separiert werden und mit dem Empfangssignal korreliert werden. Enthält das Empfangssignal Frequenzanteile der Störung, so liefert die Kreuzkorrelation ein Ergebnis, das mit Mitteln, die aus der Quadraturmodulation bekannt sind, mit dem Frequenzanteil der Störung verknüpft wird und somit phasenrichtig vom Empfangssignal abgezogen wird. Statt einer Verwendung von Filterbänken wird eine Fast-Fourier-Transformation von beiden Signalen durchgeführt, das komplexe Kreuzspektrum berechnet und vom Frequenzspektrum des Empfangssignals abgezogen. Eine Rücktransformation liefert das störbefreite Empfangssignal.

Durch diese Art der Störbefreiung wird eine Weiterverarbeitung von Nutzsignalen im Empfangssignal, die vom Ziel ausgesendet werden und deren Einfallsrichtung bestimmt werden soll, sehr erschwert, da ihre Frequenzanteile vorwiegend auch im Frequenzbereich der Störungen liegen. Bei der Korrelation von Empfangssignal und Referenzstörsignal ist dem Ergebnis nicht zu entnehmen, woher der energetisch höhere Beitrag kommt, so daß diese Frequenzanteile im Nutzsignal für die Peilung nicht verwertet werden können.

Aus der DE 35 20 398 A ist ein Verfahren zur Befreiung von Körperschallstörungen bekannt, bei dem zum Bestimmen einer spektralen Übereinstimmung zwischen Empfangssignalen und Körperschallsignalen aus dem Empfangssignal ein komplexes Empfangsspektrum und aus dem Körperschallsignal ein komplexes Körperschallspektrum gebildet werden. Empfangsspektrum und Körperschallspektrum werden dividiert, der Quotient kennzeichnet die Übertragungsfunktion für Körperschall von seiner Quelle zum elektroakustischen Wandler. Der zeitliche Mittelwert der Übertragungsfunktion wird gebildet, um kurzzeitige Schallereignisse, z. B. bei Empfang von Sonarimpulsen, im Empfangsspektrum auszumitteln, so daß die Übertragungsfunktion allein das Übertragungsverhalten für Körperschall angibt. Der Mittelwert der Übertragungsfunktion wird mit dem Körperschallspektrum multipliziert und vom Empfangsspektrum abgezogen, so daß Körperschallstörungen sicher unterdrückt werden, ohne die Peilung mit gleichfrequenten Nutzsignalanteilen zu beeinträchtigen.

Es ist deshalb Aufgabe der vorliegenden Erfindung, ein Verfahren der im Oberbegriff des Anspruchs 1 genannten Art zu schaffen, bei dem einerseits mit Hilfe des Kreuzspektrums eine spektrale Übereinstimmung zwischen Empfangssignal und Körperschallsignal festgestellt wird, andererseits Frequenzanteile des Empfangssignals im gleichen Frequenzbereich wie der auftretende Körperschall für eine weitere Signalverarbeitung erhalten bleiben.

Diese Aufgabe wird erfindungsgemäß durch die Merkmale im Kennzeichenteil des Anspruchs 1 gelöst.

In der Wasserschalltechnik werden zum Orten von Schallquellen, z.B. Oberflächenschiffen oder U-Booten, beispielsweise von einem U-Boot aus eine Vielzahl von Hydrophonen längs einer Linie oder Fläche an der Außenwandung des U-Boots angeordnet. Man erhält dadurch eine weit ausgedehnte Empfangsanordnung. Die sich durch Summation der Empfangssignale ergebende Richtcharakteristik hat einen Öffnungswinkel, der sehr klein ist, da er durch die Längs- und/oder Querausdehnung der Empfangsanlage bestimmt ist. Durch entsprechende Richtungsbildung kann diese Richtcharakteristik in viele vorgebbare Richtungen weisend oder schwenkbar erzeugt werden. Von einer weit entfernten Schallquelle, zum Beispiel einem fahrenden Schiff, werden Schallwellen ausgesendet. Sie erreichen die Empfangsanlage als ebene Wellenfronten, die abhängig von der Einfallsrichtung feste Phasenbeziehungen aufweisen. Diese Phasenbeziehungen werden für die Peilung der Schallquelle bei der Richtungsbildung kompensiert. Ändert sich die relative Lage zwischen Schallquelle und Empfangsanlage, so ändern sich auch die Phasenbeziehungen und somit die Peilung. Innerhalb eines kurzen Zeitintervalls sind jedoch Peilung und Phasenbeziehungen konstant, die einfallenden Schallwellen also kohärent. Über mehrere Zeitintervalle schwanken die Phasenbeziehungen jedoch, weil beispielsweise das zu ortende Ziel oder das Trägerfahrzeug der Empfangsanlage ihre Lage zueinander verändern.

Da die Empfangsanlage an der gesamten Länge des U-Boots angeordnet ist, und die Wandungen des U-Bootes Vibrationen durch die Antriebsaggregate und andere Aggregate aufweisen, ist es nicht zu vermeiden, daß auf die elektroakustischen Wandler Körperschall über die Wandung und von der Wandung abgestrahlt über das Wasser übertragen wird. Auch Schalldämpfungsmaterialien oder Absorber, die zwischen Empfangsanlage und U-Boot angeordnet sein können, können Körperschallstörungen nicht komplett verhindert. Aus diesem Grund installiert man Körperschallsensoren in der Nähe der lärmverursachenden Aggregate, um einen Überblick über Ausmaß und Inhalt der Störung zu erhalten.

Störquellen für den Körperschall, sind genauso örtlich unverrückbar mit dem Trägerfahrzeug verbunden wie die elektroakustischen Wandler der Empfangsanlage, so daß Körperschallausbreitungswege und damit Übertragungseigenschaften für Körperschall unverändert sind. Daraus folgt, daß in Zeitabschnitten, in denen die verursachenden Aggregate gleichen Betriebszustand aufweisen, die empfangenen Körperschallwellen an allen Empfangsorten zueinander gleiche Eigenschaften bezüglich Frequenz und Phasenlage aufweisen, also kohärent sind. Der Betriebszustand der Aggregate ändert sich aber nicht von Zeitintervall zu Zeitintervall, in denen jeweils Peilungen sich schon ändern, d.h. die zeitliche Länge des gleichen kohärenten Zustands ist für Körperschallsignale größer als für den Teil der Empfangssignale, der vom zu ortenden Schallziel stammt.

Diese Tatsache nutzt das erfindungsgemäße Verfahren, indem die zeitliche Kohärenz zwischen Empfangssignalen und Körperschallsignalen untersucht wird und diejenigen Frequenzanteile im Empfangssignal unterdrückt werden, deren Kohärenz über einen vorgebbaren Zeitabschnitt nachweisbar ist.

Bei einer Störbefreiung durch Korrelation des Empfangsspektrums mit dem Körperschallspektrum wird diese Eigenschaft nicht genutzt. Dort wid lediglich der Frequenzinhalt ausgewertet, jedoch nicht Phasenbeziehungen.

Frequenzlinien im Empfangssignal, die vom Ziel und durch Körperschallübertragung verursacht werden, werden durch die Bewertung mit der Kohärenz nur entsprechend ihrem Körperschallanteil im Empfangssignal unterdrückt, eine Auswertung zur Peilung bleibt erhalten, da der Anteil der vom Ziel empfangen wurde, im Zeitabschnitt nicht kohärent ist, sondern sich in seiner Phase verändert hat und somit nicht in die Kohärenzbestimmung für den Zeitabschnitt eingeht.

Der Vorteil des erfindungsgemäßen Verfahrens nach Anspruch 1 besteht darin, daß im Empfangsfrequenzspektrum sämtliche Frequenzanteile, die allein vom Ziel abgestrahlt wurden, für die Peilung zum Ziel benutzt werden, während die Frequenzanteile, die die Peilung verfälschen würden, da sie von den eigenen Antriebsaggregaten verursacht werden, ausgeblendet werden. Es ist also eine strenge Trennung zwischen Nutz- und Störsignal bei gleicher Frequenz möglich. Auch kleinste Peiländerungen werden durch die Störunterdrückung nicht herausgemittelt, so daß bei einer Zielverfolgung kein vorübergehender Zielverlust auftritt und stets die Peilung zum Ziel angegeben werden kann.

Ein weiterer Vorteil besteht darin, daß für das Trägerfahrzeug nur allein die Antriebsaggregate während des zeitabschnitts gleichen Betriebszustand aufweisen müssen, daß Kursänderungen des Trägerfahrzeugs nicht nur erlaubt, sondern vorteilhaft sind, da sie zu Peiländerungen und somit zu Phasenänderungen des Nutzsignals beitragen. Diese Kursänderungen können schon allein durch Strömungen im Wasser, durch Driften des Trägerfahrzeugs und nicht nur durch Lenkungsmanöver auftreten.

Nach der Weiterbildung des erfindungsgemäßen Verfahrens nach den Anspruch 2 wird der Zeitabschnitt in gleiche Zeitintervalle unterteilt und je Zeitintervall komplexe Empfangsspektren und Körperschallspektren gebildet und zu Summenspektren aufsummiert. Außerdem werden Leistungsspektren aus den komplexen Empfangs- und Körperschallspektren ermittelt und während des Zeitabschnitts aufsummiert. Aus den so gewonnenen aufsummierten Kreuzspektren und Leistungsspektren wird für jeden elektroakustischen Wandler die Kohärenz zwischen seinem Empfangssignal und den Körperschallsignalen aller Körperschallsensoren ermittelt. Der besondere Vorteil besteht darin, daß Zeitintervall und Zeitabschnitt frei wählbar sind und an die gesamte Lagesituation, in der sich das Ziel befindet, während eines Einsatzes individuell angepaßt werden können.

Besonders vorteilhaft ist es, die Kohärenz mit Hilfe der Kohärenzfunktion nach der Weiterbildung des erfindungsgemäßen Verfahrens nach Anspruchs 3 zu berechnen. Für die Kohärenzfunktion wird der Quotient aus dem konjugiert komplexen Produkt der summierten Kreuzspektren und dem Produkt der aufsummierten Leistungsspektren von Empfangssignal und Körperschallsignal gebildet. Die Kohärenzfunktion weist einen Wert zwischen 1 und 0 auf. Wenn Empfangssignale und Körperschallsignale streng kohärent sind, ist ihr Wert 1, wenn sie keine starre Phasenbeziehung zueinander aufweisen, ist ihr Wert gleich 0. Zur Störunterdrückung des Körperschalls werden die Körperschallspektren mit der zugehörigen frequenzabhängigen Kohärenzfunktion bewertet. Der besondere Vorteil einer solchen Signalverarbeitung besteht darin, daß Standardbausteine der Rechnertechnik verwendet werden können, deren Einsatz unproblematisch ist.

Nach der vorteilhaften Weiterbildung des erfindungsgemäßen Verfahrens nach Anspruch 4 wird die zu jedem Körperschallsignal bestimmte Kohärenzfunktion mit der Summe der Kohärenzfunktion aller Körperschallsignale normiert. Jedes Körperschallspektrum wird mit ihrer normierten Kohärenzfunktion multipliziert und den Körperschallanteilen im Empfangsspektrum angepaßt.

Gemäß der vorteilhaften Weiterbildung der erfindungsgemäßen Verfahren nach den Ansprüchen 5 und 6 wird die normierte Kohärenzfunktion mit einer Übertragungsfunktion des Körperschalls von jedem Körperschallsensor zum elektroakustischen Wandler, dessen Empfangsspektrum entstört werden soll, multipliziert. Die frequenzabhängige Übertragungsfunktion ist gleich dem aufsummierten Kreuzspektrum bezogen auf das aufsummierte Leistungsspektrum des Körperschallsignals, die bereits im Zusammenhang mit der Bestimmung der Kohärenzfunktion ermittelt wurden. Das Produkt aus Übertragungsfunktion und normierter Kohärenzfunktion ist eine Gewichtsfunktion für jedes Körperschallspektrum. Die so gewichteten Körperschallspektren werden vom Empfangssepktrum abgezogen. Der Vorteil besteht darin, daß durch die frequenzabhängige komplexe Übertragungsfunktion die Eigenschaften des Übertragungswegs für den Körperschall vom Körperschallsensor zum elektroakustischen Wandler der Peilanlage berücksichtigt werden, unabhängig davon, ob der Körperschall über die Wandung des Trägerfahrzeugs übertragen wurde oder an das umgebende Medium abgestrahlt und vom elektroakustischen Wandler zusammen mit dem Nutzsignals empfangen wurde. Ermittlungen theoretischer Grundlagen, Studien und Simulationen über unterschiedliche Ausbreitungswege des Körperschalls vom Aggregat zum elektroakustischen Wandler in allen gebräuchlichen Betriebszuständen erübrigen sich, da die Gewichtsfunktion für jeden Zeitabschnitt beim Einsatz der Empfangsanlage gemessen und bestimmt werden kann. Ein Mehraufwand an Rechenkapazität an Bord des Trägerfahrzeugs ist nur gering. Der besondere Vorteil dieser Maßnahme besteht darin, daß Frequenzlinien im Empfangsspektrum, die zu vom Ziel abgestrahlten Schallwellen gehören, auch wenn sie die gleiche Frequenz aufweisen wie Frequenzlinien im Körperschallspektrum, nicht ausgelöscht werden, sondern lediglich um den vom Körperschall verursachten Anteil verkleinert, also störbefreit werden.

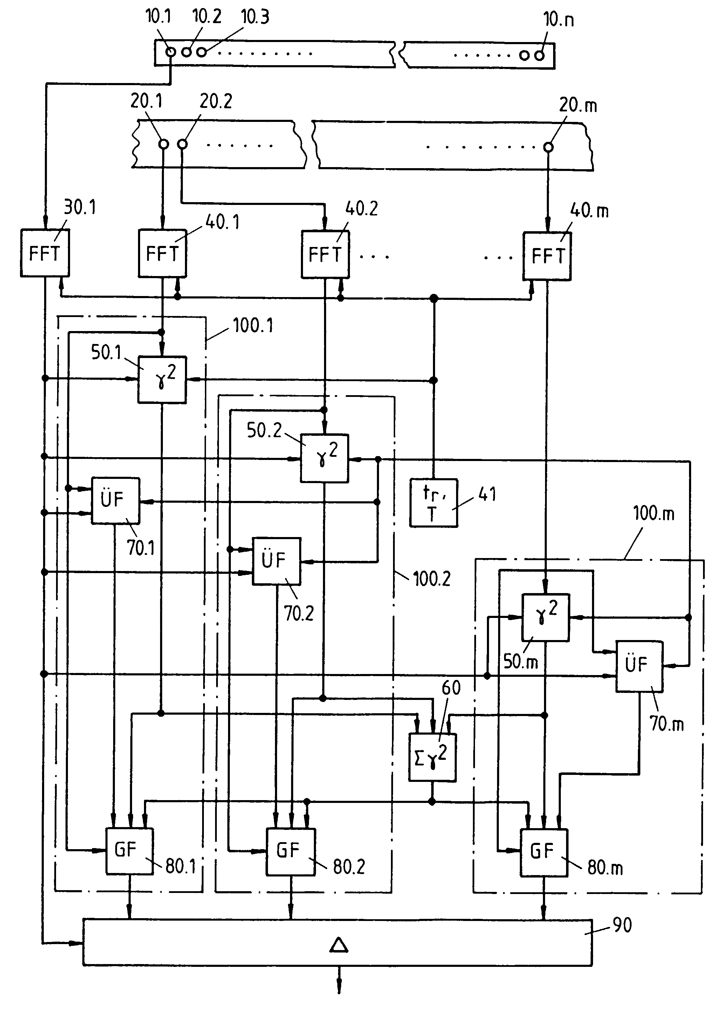

Die Erfindung ist anhand eines in der Zeichnung dargestellten Ausführungsbeispiels für eine akustische Empfangsanlage mit mehreren elektroakustischen Wandlern und Körperschallsensoren näher beschrieben.

Auf einem Trägerfahrzeug, z.B. einem Schiff, befindet sich eine Empfangsanlage mit x elektroakustischen Wandlern 10.1, 10.2, ..., 10.n (x=1, ..., n), mit der schallabstrahlende Wasserfahrzeuge gepeilt werden. Auf dem Trägerfahrzeug sind in der Nähe seiner Antriebsmaschinen und anderer Körperschall verursachenden Aggregate, z. B. Pumpen, y Körperschallsensoren 20.1, 20.2, ..., 20.m (y=1, ..., m), z. B. Beschleunigungsaufnehmer, angeordnet. Durch Vibrationen der Wandung des Trägerfahrzeugs und über das das Trägerfahrzeug umgebende Wasser wird Störschall in Form von Körperschall von den elektroakustischen Wandlern 10.1, ..., 10.n empfangen, der von den Antriebsmaschinen und den anderen Aggregaten verursacht wird.

Zur Störbefreiung eines Empfangssignals des elektroakustischen Wandlers 10.1 wird dem elektroakustischen Wandler 10.1 eine Frequenzanalyseschaltung 30.1, und jedem Körperschallsensor 20.1, ..., 20.m ein FFT-Analysator 40.1, ..., 40.m nachgeordnet zum Bestimmen des komplexen Empfangsspektrums $F_{10.1}(f, t)$ des Empfangssignals am elektroakustischen Wandler 10.1 und der komplexen Körperschallspektren $F_{20.1}(f, t)$, $F_{20.2}(f, t)$, ..., $F_{20.m}(f, t)$ von Körperschallsignalen der Körperschallsensoren 20.1, ..., 20.m je Zeitintervall $t_r$. Jedem FFT-Analysator 40.1, 40.2, ...., 40.m ist ein Bewertungsrechner 100.1, 100.2, ..., 100.m nachgeschaltet, in dem das Empfangsspektrum $F_{10.1}$ am Ausgang der Frequenzanalyseschaltung 30.1 mit dem Körperschallspektrum $F_{20.y}$ eines der Körperschallsensoren 20.1, 20.2, ..., 20.m verglichen, die Kohärenz zwischen Empfangsspektrum $F_{10.1}$ und Körperschallspektrum $F_{20.y}$ bestimmt und das Körperschallspektrum $F_{20.y}$ bewertet wird. Ein Tektgenerator 41 steuert je vorgebbarem Zeitintervall $t_r$ die Frequenzanalyseschaltung 30.1, die FFT-Analysatoren 40.1, 40.2, ..., 40.m und die Bewertungsrechner 100.1, 100.2, 100.m an. Im Taktgeber 41 ist ein Zeitabschnitt T einstellbar, der q Zeitintervalle $t_r$ umfaßt.

Jeder Bewertungsrechner 100.1, 100.2, 100.m enthält Kohärenzrechenschaltungen 50.1, ..., 50.m zum Berechnen der Kohärenzfunktionen $\gamma_{xy}^2$ zwischen dem Empfangssignal am elektroakustischen Wandler 10.1 und den Körperschallsignalen an den Körperschallsensoren 20.1, ..., 20.m. Innerhalb des Zeitabschnitts T, der q Zeitintervalle $t_r$(r=1, ..., q) umfaßt, werden aus dem Empfangsspektrum $F_{10.x}(f, t)$ und den Körperschallspektren $F_{20.y}(f, t)$ Kreuzspektren gebildet und über der Zeit aufsummiert

$$\sigma_{xy} = \sum_{r=1}^{q} F_{10 \cdot x}(f, t_r) \cdot F_{20 \cdot y}^{*}(f, t_r),$$

Leistungsspektren des Empfangsspektrums $F_{10.x}(f, t_r)$ gebildet und über der Zeit aufsummiert

$$S_{xx}(f) = \sum_{r=1}^{q} \left| F_{20 \cdot y}(f, t_r) \right|^2$$

und Leistungsspektren des Körperschallspektrums $F_{20.y}(f, t_r)$ gebildet und über der Zeit $t_r$ aufsummiert

$$S_{yy}(f) \;=\; \sum_{r=1}^{q} \left| F_{20 \cdot y}(f, t_r) \right|^2 .$$

Die Kohärenzschaltungen 50.1, 50.2, ... 50.m werden von dem Taktgeber 41 angesteuert. An ihren Ausgängen sind die frequenzabhängigen Kohärenzfunktionen

$$\gamma_{xy}^2(f) = \frac{\sigma_{xy}(f) . \sigma_{xy}^*(f)}{S_{xx}(f) . S_{yy}(f)}$$

je Zeitabschnitt T abnehmbar.

Für den elektroakustischen Wandler 10.1 (x=1) und den Körperschallaufnehmer 20.2 (y=2) lautet beispielsweise die Kohärenzfunktion $\gamma_{12}^2$ die in der Kohärenzrechenschaltung 50.2 des Bewertungsrechners 100.2 gebildet wird,:

$$\gamma_{12}^2(f) = \frac{\sigma_{12}(f) . \sigma_{12}^*(f)}{S_{11}(f) . S_{22}(f)} .$$

Sämtlichen Kohärenzrechenschaltungen 50.1, ..., 50.m ist eine Summationsschaltung 60 nachgeschaltet, in der die Summe aller Kohärenzfunktionen $\gamma_{1y}^2$ zwischen dem elektroakustischen Wandler 10.1 und den y Körperschallsensoren 20.1, ..., 20.m (y=1,..., m) gebildet wird:

$$\sum_{y=1}^{m} \gamma_{1y}^2(f) \;=\; \gamma_{11}^2(f) + \gamma_{12}^2(f) + \gamma_{13}^2(f) + \ldots + \gamma_{1m}^2(f)$$

Rechenstufen 70.1, ..., 70.m zum Berechnen der frequenzabhängigen Übertragungsfuktion $\ddot{U}F_{1y}(f)$ zwischen den Körperschallsensoren 20.1, ..., 20.m und dem elektroakustischen Wandler 10.1 sind der Frequenzanalyseschaltung 30.1 und den FFT-Analysatoren 40.1, ..., 40.m nachgeschaltet. Die Übertragungsfunktion $\ddot{U}F_{1y}(f)$ ist gleich dem Quotienten aus über dem Zeitabschnitt T aufsummierten Kreuzspektren $\sigma_{xy}$ geteilt durch die aufsummierten Leistungsspektren $S_{yy}$ des Körperschallspektrums $F_{20.y}$

$$\ddot{U}F_{xy}(f) = \frac{\sigma_{xy}(f)}{S_{yy}(f)}$$

Die Übertragungsfunktionen $\ddot{U}F_{xy}(f)$ für x=1 und y=2 zwischen dem elektroakustischen Wandler 10.1 und dem Körperschallsensor 20.2 wird beispielsweise in der Rechenstufe 70.2 des Bewertungsrechners 100.2 berechnet:

$$\ddot{U}F_{12}(f) = \frac{\sigma_{12}(f)}{S_{22}(f)}$$

Die Bausteine zum Bestimmen der aufsummierten Kreuzspektren $\sigma_{xy}$ und Leistungsspektren $S_{xx}$ und $S_{yy}$ werden von den Kohärenzrechenschaltungen 50.1, ..., 50.m und den Rechenstufen 70.1, ..., 70.m zum Berechnen der Kohärenzfunktionen $\gamma_{xy}^2$ und der Übertragungsfunktion $\ddot{U}F_{xy}$ gemeinsam benutzt.

In Gewichtsfunktionsrechenstufen 80.1, ..., 80.m wird aus der Kohärenzfunktion $\gamma_{xy}^2$, ihrer Summe

$$\sum_{y=1}^{m} \gamma_{xy}^2$$

und der Übertragungsfunktion ÜF$_{xy}$ eine frequenzabhängige Gewichtsfunktion

$$G_{xy}(f) \;=\; ÜF_{xy}(f) \cdot \frac{\gamma_{xy}^2(f)}{\sum\limits_{y=1}^{m} \gamma_{xy}^2(f)}$$

berechnet und mit dem Körperschallspektrum F$_{20y}$ multipliziert. Die Gewichtsfunktion GF$_{xy}$ für das Körperschallspektrum F$_{20.2}$ des Körperschallsensors 20.2 lautet beispielsweise:

$$G_{x2} = ÜF_{x2} \cdot \frac{\gamma_{x2}^2}{\gamma_{x1}^2 + \gamma_{x3}^2 + ... + \gamma_{xm}^2}$$

Zu jedem Körperschallspektrum F$_{20.y}$ gehört also ein Bewertungsrechner 100.1, ..., 100.m, der aus einer Kohärenzschaltung 50.1 bzw. 50.2, ... bzw.50.m, einer Rechenstufe 70.1 bzw. 70.2, ... bzw. 70.m und einer Gewichtsfunktionsrechenstufe 80.1 bzw. 80.2, ... bzw. 80.m, besteht. Alle Bewertungsrechner 100.1, 100.2, ..., 100.m und die Frequenzanalyseschaltung 30.1 sind mit einer Subtraktionsschaltung 90 verbunden, in der die mit der Gewichtsfunktion G$_{1y}$ multiplizierten Körperschallspektren F$_{20.y}$ vom Empfangsspektrum F$_{10.1}$ (f, t$_r$) abgezogen werden. Am Ausgang der Subtraktionsschaltung 90 erscheint das vom Körperschall befreite Empfangsspektrum F$_{10.1}$ des elektroakustischen Wandlers 10.1, aus dem durch Rücktransformation in den Zeitbereich das störbefreite Empfangssignal zu ermitteln ist.
Die Signalverarbeitung zur Störbefreiung der Empfangssignale der anderen elektroakustischen Wandler 10.2, ..., 10.n erfolgt in gleichen aufgebauten Bewertungsrechnern 100, die nicht gezeigt sind.

**Patentansprüche**

1.   Verfahren zur Befreiung von Körperschallstörungen bei Empfangssignalen einer akustischen Peilanlage mit mehreren elektroakustischen Wandlern, die auf oder vor einem körperschallführenden Träger angeordnet sind und mindestens einem Körperschallsensor, der in der Nähe von körperschallverursachenden Aggregaten angeordnet ist, durch Bestimmen einer spektralen Übereinstimmung zwischen Empfangssignalen und Körperschallsignalen mittels ihrer komplexen Empfangs- und Körperschallspektren, dadurch gekennzeichnet, daß ein Zeitabschnitt (T) aus mehreren Zeitintervallen (t$_r$) gebildet wird, daß aus den komplexen Empfangsspektren und Körperschallspektren je Zeitintervall komplexe Kreuzspektren zwischen dem Empfangssignal des einen elektroakustischen Wandlers und den Körperschallsignalen aller Körperschallsensoren bestimmt werden, daß die Kreuzspektren eines Zeitabschnitts aufsummiert werden und daraus Kohärenzen zwischen dem Empfangssignal jedes einzelnen elektroakustischen Wandlers (10.x) und den Körperschallsignalen aller Körperschallsensoren (20.1, 20.2, ..., 20.y) bestimmt werden, daß Frequenzanteile im Empfangssignal entsprechend ihrer Kohärenz mit Frequenzanteilen im Körperschallsignal unterdrückt werden.

2.   Verfahren nach Anspruch 1, dadurch gekennzeichnet, daß aus sämtlichen während des Zeitabschnitts (T) je Zeitintervall (t$_r$) ermittelten komplexen Empfangsspektren (F$_{10.x}$) Leistungsspektren des Empfangssignals und aus sämtlichen während des Zeitabschnitts (T) ermittelten komplexen Körperschallspektren (F$_{20.y}$) Leistungsspektren des Körperschallsignals ermittelt werden, daß die Leistungsspektren und Kreuzspektren aufsummiert werden und aus den im Zeitabschnitt aufsummierten Kreuzspektren ($\sigma_{xy}$) und Leistungsspektren (S$_{xx}$, S$_{yy}$) die Kohärenz zwischen dem Empfangssignal jedes elektroakustischen Wandlers (10.x) in bezug auf alle Körperschallsensoren (20.1, 20.2, ..., 20.m) einzeln ermittelt wird.

3.   Verfahren nach Anspruch 2, dadurch gekennzeichnet, daß die Kohärenz durch Bilden der Kohärenzfunktionen ($\gamma_{xy}^2$) ermittelt wird, daß die Kohärenzfunktion ($\gamma_{xy}^2$)gleich der Summe ($\sigma_{xy}$) aller konjugiert komplexen Produkte jedes im Zeitabschnitt ermittelten Kreuzspektrums geteilt durch das Produkt der Summe (S$_{xx}$, S$_{yy}$) aller im Zeitabschnitt ermittelten Leistungsspektren des Empfangssignals und des Körperschallsignals ist und daß jedes Körperschallspektrum (F$_{20.y}$) mit der zugehörigen Kohärenzfunktion ($\gamma_{xy}^2$) bewertet wird.

**4.** Verfahren nach Anspruch 3, dadurch gekennzeichnet, daß für die Bewertung die Summe sämtlicher Kohärenz-funktionen ($\gamma^2_{xy}$) über die Anzahl (y) der Körperschallsensoren (20.1, 20.2, ..., 20.m) gebildet wird und alle Kohä-renzfunktionen ($\gamma^2_{xy}$) auf diese Summe bezogen werden.

**5.** Verfahren nach Anspruch 3 oder 4, dadurch gekennzeichnet, daß eine Übertragungsfunktion ($\ddot{U}F_{xy}$) für den Kör-perschall von jedem Körperschallsensor (20.1, 20.2, ..., 20.m) zum elektroakustischen Wandler (10.x) aus dem Quotienten des aufsummierten Kreuzspektrums ($\sigma_{xy}$) bezogen auf das aufsummierte Leistungsspektrum ($S_{yy}$) des Körperschallspektrums ermittelt wird, daß die Übertragungsfunktion ($\ddot{U}F_{xy}$) mit der Kohärenzfunktion ($\gamma^2_{xy}$) multi-pliziert wird und eine Gewichtsfunktion ($G_{xy}$) zur Bewertung jedes Körperschallspektrums ($F_{20.y}$) liefert.

**6.** Verfahren nach Anspruch 5, dadurch gekennzeichnet, daß daß Körperschallspektrum ($F_{20.y}$) jedes Körperschallsignals mit der Gewichtsfunktion ($G_{xy}$) multipliziert wird und die so bewerteten Körperschallspektren ($G_{xy} \cdot F_{20.y}$) vom Empfangsspektrum ($F_{10.x}$) abgezogen werden.

**7.** Vorrichtung zum Ausüben des erfindungsgemäßen Verfahrens nach einem der Ansprüche 1 bis 6 unter Verwendung einer Peilanlage mit mehreren elektroakustischen Wandlern, die auf oder vor einem körperschallführenden Träger an Bord eines Trägerfahrzeugs angeordnet sind, und mindestens einem Körperschallsensor, der in der Nähe von Körperschall verursachenden Aggregaten angeordnet ist, wobei jedem elektroakustischen Wandler eine Frequenzanalyseschaltung und jedem Körperschallsensor ein FFT-Analysator nachgeschaltet ist, dadurch gekennzeichnet, daß ein Taktgenerator (41) zum Vorgeben eines Zeitabschnitts (T) vorgesehen ist, daß jede Frequenzanalyseschaltung (30.x) ausgangsseitig mit einer Anzahl Bewertungsrechnern (100.1, 100.2, ..., 100.m), die gleich der Anzahl (m) der Körperschallsensoren (20.1, 20.2, ..., 20.m) ist, verbunden ist, daß die Bewertungsrechner (100.1, 100.2, ..., 100.m) von dem Taktgenerator (41) ansteuerbar sind, daß jeder Bewertungsrechner (100.1, 100.2, ..., 100.m) mit dem Ausgang eines der FFT-Analysatoren (40.1, 40.2, ..., 40.m) verbunden ist zum Bestimmen der Kohärenz zwischen Empfangsspektrum ($F_{10.x}(f, t)$) und Körperschallspektrum ($F_{20.y}(f, t)$) und Bewerten jedes Körperschallspektrums ($F_{20.y}(f, t)$) je Zeitabschnitt (T) und daß die Ausgänge der Bewertungsrechner (100.1, ..., 100.m) und der Ausgang der Frequenzanalyseschaltung (30.x) mit einer Subtraktionsschaltung (90) verbunden sind, an deren Ausgang ein störbefreites Empfangssepktrum des elektroakustischen Wandlers (10.1) je Zeitabschnitt (T) abnehmbar ist und daß für jeden elektroakustischen Wandler (20.2, 20.3, ...) eine gleiche Anzahl von Bewertungsrechnern vorgesehen ist, die jeweils mit einer Subtraktionsschaltung verbunden sind.

**8.** Vorrichtung nach Anspruch 7, dadurch gekennzeichnet, daß jeder Bewertungsrechner (100.1, 100.2, ..., 100.m) eine Kohärenzrechenschaltung (50.1, 50.2, ..., 50.m) zum Berechnen der Kohärenzfunktion ($\gamma^2_{xy}$) enthält, die mit dem Taktgenerator (41) verbunden ist.

**9.** Vorrichtung nach Anspruch 8, dadurch gekennzeichnet, daß jeder Bewertungsrechner (100.1, 100.2, ..., 100.m) parallel zur Kohärenzrechenschaltung (50.1, ..., 50.m) eine Rechenstufe (70.1, 70.2, ..., 70.m) zum Bestimmen einer Übertragungsfunktion ($\ddot{U}F_{yx}(f)$) enthält.

**10.** Vorrichtung nach Anspruch 9, dadurch gekennzeichnet, daß in jedem Bewertungsrechner (100.1, 100.2, ..., 100.m) die Ausgänge der Kohärenzrechenschaltung (50.1, ..., 50.m) und der Rechenstufe (70.1, ..., 70.m) mit einer Gewichtsfunktionsrechenstufe (80.1, 80.2, ..., 80.m) verbunden sind, daß die Gewichtsfunktionssrechenstufe (80.1, ..., 80.m) mit dem FFT-Analysator (40.1, ..., 40.m) am Eingang des Bewertungsrechners (100.1, ..., 100.m) und mit dem Ausgang einer Summationsschaltung (60) verbunden ist, daß die Summationsschaltung (60) eingangsseitig mit den Kohärenzrechenschaltungen (50.1, 50.2, ..., 50.m) in allen Bewertungsrechnern (100.1, 100.2, ..., 100.m) zusammengeschaltet ist.

**Claims**

**1.** Method of eliminating interference due to structure-borne sound in received signals of a direction-finding installation with a plurality of electroacoustic transducers which are disposed on or in front of a carrier which conducts structure-borne sound and at least one structure-borne sound sensor which is disposed in the vicinity of assemblies which cause structure-borne sound, by determining a spectral correspondence between received signals and structure-borne sound signals by means of their complex received and structure-borne sound spectra, characterised in that a time period (T) is formed from a plurality of time intervals ($t_r$), that from the complex received spectra and structure-borne sound spectra for each time interval complex cross spectra between the received signal of one electroacoustic transducer and the structure-borne sound signals of all structure-borne sound sensors are determined, that the cross spectra of a time period are added up and from this coherences between the received signal of each individual electroacoustic transducer (10.x) and the structure-borne sound signals of all structure-borne sound sensors (20.1, 20.2, ..., 20.y) are determined, that frequency components in the received signal are suppressed according to their coherence with frequency components in the structure-borne sound signal.

2. Method as claimed in Claim 1, characterised in that power spectra of the received signal are determined from all of the complex received spectra ($F_{10.x}$) determined for each time interval ($t_r$) during the time period (T) and power spectra of the structure-borne sound signal are determined from all of the complex structure-borne sound signals ($F_{20.y}$) determined during the time period (T), that the power spectra and cross spectra are added up and from the cross spectra ($\sigma_{xy}$) and power spectra ($S_{xx}$, $S_{yy}$) added up in the time period the coherence between the received signal of each electroacoustic transducer (10.x) is determined individually in relation to all structure-borne sound sensors (20.1, 20.2, ..., 20.m).

3. Method as claimed in Claim 2, characterised in that the coherence is determined by forming the coherence functions ($\gamma^2_{xy}$), that the coherence function ($\gamma^2_{xy}$) is equal to the sum ($\sigma_{xy}$) of all conjugate complex products of each cross spectrum determined in the time period divided by the product of the sum ($S_{xx}$, $S_{yy}$) of all power spectra of the received signal and of the structure-borne sound signal determined in the time period, and that each structure-borne sound spectrum ($F_{20.y}$) is evaluated with the appertaining coherence function ($\gamma^2_{xy}$).

4. Method as claimed in Claim 3, characterised in that for the evaluation the sum of all the coherence functions ($\gamma^2_{xy}$) is formed over the number (y) of structure-borne sound sensors (20.1, 20.2, ..., 20.m) and all coherence functions ($\gamma^2_{xy}$) are related to this sum.

5. Method as claimed in Claim 3 or 4, characterised in that a transfer function ($\ddot{U}F_{xy}$) for the structure-borne sound of each structure-borne sound sensor (20.1, 20.2,2 ..., 20.m) to the electroacoustic transducer (10.x) is determined from the quotient of the cross spectrum ($\sigma_{xy}$) which has been added up related to the power spectrum ($S_{yy}$) of the structure-borne sound spectrum which has been added up, that the transfer function ($\ddot{U}F_{xy}$) is multiplied by the coherence function ($\gamma^2_{xy}$) and supplies a weight function ($G_{xy}$) for evaluation of each structure-borne sound spectrum ($F_{20.y}$).

6. Method as claimed in Claim 5, characterised in that the structure-borne sound spectrum ($F_{20.y}$) of each structure-borne sound signal is multiplied by the weight function ($G_{xy}$) and the structure-borne sound spectra ($G_{xy} \cdot F_{20.y}$) thus evaluated are subtracted from the received spectrum ($F_{10.x}$).

7. Apparatus for carrying out the method according to the invention as claimed in one of Claims 1 to 6 using a direction-finding installation with a plurality of electroacoustic transducers which are disposed on or in front of a carrier which conducts structure-borne sound on board a carrier vehicle, and at least one structure-borne sound sensor which is disposed in the vicinity of assemblies which cause structure-borne sound, wherein a frequency analysis circuit is connected downstream of each electroacoustic transducer and a FFT analyser is connected downstream of each structure-borne sound sensor, characterised in that a clock (41) is provided for predetermining a time period (T), that each frequency analysis circuit (30.x) is connected on the output side to a number of evaluation computers (100.1, 100.2, ..., 100.m) which is equal to the number (m) of structure-borne sound sensors (20.1, 20.2, ..., 20.m), that the evaluation computers (100.1, 100.2, ..., 100.m) can be controlled by the clock (41), that each evaluation computer (100.1, 100.2, ..., 100.m) is connected to the output of one of the FFT analysers (40.1, 40.2, ..., 40.m) for determining the coherence between the received spectrum ($F_{10.x}(f, t)$) and the structure-borne sound spectrum ($F_{20.y}(f, t)$) and evaluating each structure-borne sound spectrum ($F_{20.y}(f, t)$) for each time period (T), and that the outputs of the evaluation computers (100.1, ..., 100.m) and the output of the frequency analysis circuit (30.x) are connected to a subtraction circuit (90) at the output of which an interference-free received spectrum of the electroacoustic transducer (10.1) can be tapped for each time period, and that for each electroacoustic transducer (20.2, 20.3, ...) an equal number of evaluation computers is provided which are in each case connected to a subtraction circuit.

8. Apparatus as claimed in Claim 7, characterised in that each evaluation computer (100.1., 100.2, ..., 100.m) contains a coherence computing circuit (50.1, 50.2, ..., 50.m) for computing the coherence function ($\gamma^2_{xy}$), which is connected to the clock (41).

9. Apparatus as claimed in Claim 8, characterised in that each evaluation computer (100.1, 100.2, ..., 100.m) contains parallel to the coherence computing circuit (50.1, ..., 50.m) a computing stage (70.1, 70.2, ..., 70.m) for determining

a transfer function ($\ddot{U}F_{xy}(f)$).

**10.** Apparatus as claimed in Claim 9, characterised in that in each evaluation computer (100.1, 100.2, ..., 100.m) the outputs of the coherence computing circuit (50.1, ..., 50.m) and of the computing stage (70.1, ..., 70.m) are connected to a weight function computing stage (80.1,80.2, ..., 80.m), that the weight function computing stage (80.1, ..., 80.m) is connected to the FFT analyser (40.1, ..., 40.m) at the input of the evaluation computer (100.1, ..., 100.m) and to the output of a summation circuit (60), that the summation circuit (60) is connected together on the input side to the coherence computing circuits (50.1, 50..2, ..., 50.m) in all evaluation computers (100.1, 100.2, ..., 100.m).

**Revendications**

**1.** Procédé pour éliminer des parasites de bruit de corps dans des signaux reçus d'un appareil de repérage acoustique ayant plusieurs transducteurs électroacoustiques, qui sont disposés sur ou devant un porteur conduisant du bruit de corps, et qui est associé à au moins un capteur de bruit de corps qui est disposé au voisinage d'ensembles produisant du bruit de corps, par la détermination d'une concordance spectrale entre des signaux reçus et des signaux de bruit de corps au moyen de leurs spectres complexes de réception et de bruit de corps, caractérisé en ce qu'une période de temps (T) est formée de plusieurs intervalles ($t_r$) de temps, qu'à partir des spectres complexes de réception et des spectres de bruit de corps à chaque intervalle de temps des spectres complexes croisés sont déterminés entre le signal reçu d'un transducteur électroacoustique et les signaux de bruit de corps de tous les capteurs de bruit de corps, que les spectres de bruit de corps d'une période de temps sont additionnés et que des cohérences sont déterminées à partir de ceux-ci entre le signal reçu de chaque transducteur électroacoustique individuel (10.x) et les signaux de bruit de corps de tous les capteurs de bruit de corps (20.1, 20.2, ..., 20.y), que des composantes de fréquence dans le signal reçu correspondant à leur cohérence avec des composantes de fréquence dans le signal de bruit de corps sont éliminées.

**2.** Procédé selon la revendication 1, caractérisé en ce qu'à partir de tous les spectres complexes ($F_{10.x}$) de réception obtenus pendant la période de temps (T) à chaque intervalle de temps ($t_r$), des spectres de puissance du signal reçu sont obtenus, et à partir de tous les spectres complexes ($F_{20.y}$) de bruit de corps obtenus pendant la période de temps (T) des spectres de puissance du signal de bruit de corps sont obtenus, que les spectres de puissance et les spectres croisés sont additionnés et qu'à partir des spectres croisés ($\sigma_{xy}$) et des spectres ($S_{xx}$, $S_{yy}$) de puissance additionnés pendant la période de temps, la cohérence entre le signal reçu de chaque transducteur électroacoustique (10.x) par rapport à tous les capteurs (20.1, 20.2, ..., 20.m) de bruit de corps est obtenue séparément.

**3.** Procédé selon la revendication 2, caractérisé en ce que la cohérence est obtenue par la formation des fonctions ($\gamma^2_{xy}$) de cohérence, que la fonction ($\gamma^2_{xy}$) de cohérence est égale à la somme ($\sigma_{xy}$) de tous les produits complexes conjugués de chaque spectre croisé obtenu pendant la période de temps, divisée par le produit de la somme ($S_{xx}$, $S_{yy}$) de tous les spectres de puissance du signal reçu et du signal de bruit de corps obtenus pendant la période de temps, et que chaque spectre de bruit de corps ($F_{20.y}$) est évalué au moyen de la fonction de cohérence correspondante.

**4.** Procédé selon la revendication 3, caractérisé en ce que pour l'évaluation, la somme de toutes les fonctions ($\gamma^2_{xy}$) de cohérence sur le nombre (y) de capteurs (20.1, 20.2, ..., 20.m) de bruit de corps est formée et que toutes les fonctions ($\gamma^2_{xy}$) de cohérence sont liées à cette somme.

**5.** Procédé selon la revendication 3 ou 4, caractérisé en ce qu'une fonction ($\ddot{U}F_{xy}$) de transfert est obtenue pour le bruit de corps, de chaque capteur (20.1, 20.2, ..., 20.m) de bruit de corps au transducteur électroacoustique (10.x), à partir du quotient du spectre croisé ($\sigma_{xy}$) additionné par le spectre additionné ($S_{yy}$) de puissance du spectre de bruit de corps, que la fonction ($\ddot{U}F_{xy}$) de transfert est multipliée par la fonction ($\gamma^2_{xy}$) de cohérence et donne une fonction ($G_{xy}$) de pondération pour l'évaluation de chaque spectre ($F_{20.y}$) de bruit de corps.

**6.** Procédé selon la revendication 5, caractérisé en ce que le spectre ($F_{20.y}$) de bruit de corps de chaque signal de bruit de corps est multiplié par la fonction ($G_{xy}$) de pondération et que les spectres de bruit de corps ainsi évalués ($G_{xy}.F_{20.y}$) sont soustraits du spectre ($F_{10.x}$) de réception.

**7.** Dispositif pour mettre en oeuvre le procédé de l'invention selon une des revendications 1 à 6 lors de l'utilisation d'un appareil de repérage avec plusieurs transducteurs électroacoustiques qui sont disposés sur ou devant un porteur transmettant du bruit de corps à bord d'un véhicule porteur et avec au moins un capteur de bruit de corps qui est disposé au voisinage des ensembles provoquant du bruit de corps, dans lequel un circuit d'analyse de fréquence est disposé après chaque transducteur électroacoustique et un analyseur de transformée de Fourier rapide est disposé après chaque capteur de bruit de corps, caractérisé en ce qu'un générateur (41) d'horloge est prévu pour délivrer une période (T) de temps, que chaque circuit (30.x) d'analyse de fréquence est relié du côté de sa sortie à un nombre de calculateurs (100.1, 100.2, ..., 100.m) d'évaluation, qui est égal au nombre (m) de capteurs (20.1, 20.2, ..., 20.m) de bruit de corps, que les calculateurs (100.1, 100.2, ..., 100.m) d'évaluation peuvent être commandés par le générateur (41) d'horloge, que chaque calculateur (100.1, 100.2, ..., 100.m) d'évaluation est relié à la sortie d'un des analyseurs (40.1, 40.2, ..., 40.m) de transformée de Fourier rapide pour déterminer la cohérence entre un spectre de réception ($F_{10.x}$(f,t)) et un spectre ($F_{20.y}$(f,t)) de bruit de corps et pour évaluer chaque spectre ($F_{20.y}$(f,t)) de bruit de corps à chaque période (T) de temps, et que les sorties du calculateur d'évaluation (100.1, ..., 100.m) et la sortie du circuit (30.x) d'analyse de fréquence sont reliées à un circuit soustracteur (90) à la sortie duquel un spectre de réception sans parasites du transducteur électroacoustique (10.1) est disponible à chaque période (T) de temps, et que pour chaque transducteur électroacoustique (10.1, 10.2, ...) un nombre égal de calculateurs d'évaluation est prévu, qui sont reliés respectivement à un circuit de soustraction.

8. Dispositif selon la revendication 7, caractérisé en ce que chaque calculateur (100.1, 100.2, ..., 100.m) d'évaluation contient un circuit (50.1, 50.2, ..., 50.m) de calcul de cohérence pour calculer la fonction ($\gamma^2_{xy}$) de cohérence qui est relié à un générateur (41) d'horloge.

9. Dispositif selon la revendication 8, caractérisé en ce que chaque calculateur (100.1, 100.2, ..., 100.m) d'évaluation comprend en parallèle avec le circuit (50.1, 50.2, ..., 50.m) de calcul de cohérence un étage (70.1, 70.2, ..., 70.m) de calcul pour calculer une fonction ($ÜF_{yx}$(f)) de transfert.

10. Dispositif selon la revendication 9, caractérisé en ce que dans chaque calculateur d'évaluation (100.1, 100.2, ..., 100.m) les sorties du circuit (50.1, 50.2, ..., 50.m) de calcul de cohérence et des étages (70.1, 70.2, ..., 70.m) de calcul sont reliées à un étage (80.1, 80.2, ..., 80.m) de calcul de fonction de pondération, que l'étage (80.1, 80.2, ..., 80.m) de calcul de fonction de pondération est relié à l'analyseur (40.1, 40.2, ..., 40.m) de transformée de Fourier rapide à l'entrée du calculateur d'évaluation (100.1, 100.2, ..., 100.m), et avec la sortie d'un circuit (60) de sommation, que le circuit (60) de sommation est relié du côté de son entrée avec les circuits (50.1, 50.2, ..., 50.m) de calcul de cohérence dans tous les calculateurs d'évaluation (100.1, 100.2, ..., 100.m).